# EUROPEAN PATENT SPECIFICATION

(11) **EP 2 808 232 B1**
(45) Date of publication and mention of the grant of the patent: **13.07.2016**
(21) Application number: 13382195.9
(22) Date of filing: 27.05.2013
(51) Int. Cl.: B62D 21/02

(54) **Lightened chassis and profile for trailer and semi-trailer**
Leicht Chassis und Profil für Anhänger und Auflieger
Chassis allégée et profil pour remorque et semi-remorque

(43) Date of publication of application: 03.12.2014
(73) Proprietor: Sor Iberica S.A., 46600 Alzira (ES)
(72) Inventor: Clar Gascon, Víctor, 46010 Valencia (ES); Ibiza Palacios, Julio Enrique, 46417 Riola (Valencia) (ES)
(74) Representative: Gonzalez-Alberto Rodriguez, Natalia

(56) References cited:
- FR-A3- 2 920 124
- GB-A- 2 458 956
- US-A- 5 351 990
- US-A1- 2007 296 197

## Description

### Objet of the invention

The present invention, a light weight profile chassis for trailers and semi-trailers, refers to a chassis for trailers and semi-trailers, preferably those with a refrigeration unit, whose innovative formation, especially in its material and the profile design of the crossbars incorporated therein, makes it possible to reduce its weight considerably without losing resistance, thereby advantageously making it possible to increase the vehicle's load capacity.

The present invention is applicable to the industrial sector dedicated to the manufacture of vehicles, focusing specifically on the field of chassis for semi-trailer type vehicles.

### Background of the invention

As is well known, the chassis of semi-trailer vehicles is formed by a metal structure or frame which sustains the bodywork, in addition to various mechanical parts of the vehicle and in the case of transport trucks or semi-trailers, the container for the load, in all cases constituting a key component which strengthens and stabilizes the vehicle under different conditions.

Different types of chassis with different frames and profiles are known from the state of the art. US-A-5351990 discloses a chassis with two parallel main steel beams with a particular profile. GB-A-2458956 discloses a chassis for a vehicle comprising a framework with tubular sections interconnected. US2007296197-A1 discloses a road trailer with a frame consisting of profiles to support the floor. FR-A-2920124 discloses a beam for a chassis of a vehicle having a U section.

In the case of semi-trailers, said frame usually comprises two parallel crossbars, as US-A-5351990, running longitudinally from one end to the other of the same, which normally are manufactured from S355 type steel, usually have a C, I or double T profile formed by the welding of two or more components, ranging between 5 and 12 mm in thickness.

Thus, given that the transport industry is currently worried about cost reductions, reduced vehicle weight and reduced maintenance costs, the present invention offers advantages which have an effect on said savings, since said weight reduction facilitates:
- an increase in useful load;
- fuel savings;
- less material wear (tires);
- less external maintenance;
- less internal maintenance for scratches and bumps;
- reduced environmental impact.

The main aim of the present invention is to provide a chassis to reduce the weight of a semi-trailer by developing a new design in the profile of the crossbars that form the chassis frame, thus making them lighter without affecting the chassis features, the abovementioned advantages therefore being also thus obtained, amongst which the semi-trailer's increased useful load capacity particularly stands out.

Moreover, it is worth mentioning, at least on the applicant's behalf, that no other chassis with similar technical, structural and formational characteristics to those disclosed, promoted and claimed herein is known.

### Explanation of the invention

The chassis, object of the present invention, is a new chassis for trailers and semi-trailers, particularly trailers and semi-trailers with a refrigerated container. Its distinctive feature being that it presents an innovative formation in terms of design and the profile geometry of the crossbars thereof, aiming to reduce the weight of the chassis in order to be able to increase the useful load of the semi-trailer, amongst other advantages.

For this reason, the profile of the aforementioned chassis crossbars described have an optimal geometry which facilitates its thickness reduction, having optimized likewise, the type of steel used, all of which makes it possible to attain up to 700 more kg of useful load for transport.

Furthermore, said weight reduction in the chassis provides additional advantages worth highlighting, such as reduced maintenance, reduced fuel consumption, less wear and environmental improvements.

The crossbars currently employed have a transversal section with a C profile or a double T type profile (or I or H profile, usually IPE type), which is a laminated or reinforced profile whose transversal section is formed by two wings, joint by a core. Said wings are parallel to one another and perpendicular to the core. However, the profile of the crossbars of the chassis described in the present invention is different. More specifically, the crossbar is formed according to the features of independent claim 1.

Therefore, a profile according to claim 1 is an object of the invention.

Said S profile may be obtained in a continuous section along the length of the whole crossbar, from one bent component which avoids welding, as is the case with the C or the two T's required in the traditional profile. Owing to its design, this profile increases the moment of inertia of the section given that, in comparison to an "I" section, there is a greater section at the ends of the same, thus provoking an increase in its moment of inertia and thereby improving the resistant module and reducing manufacturing costs.

Furthermore, whilst the wings of the profile's double T in conventional crossbars are 10 mm thick or deep and the core is 5 mm, the continuous profile of the new profile measures 4 mm, which facilitates a reduction in the total weight of the crossbars, thus enabling the useful load to be increased.

At the same time, whilst the total height of the double T of the traditional crossbar profile is 220 mm, the new profile is only 200 mm high, also making it possible to increase the height of the container unit arranged on the chassis.

As already mentioned, the respective ends or second wings of said "S" in the new "S" profile of the chassis crossbars, object of the invention, and are bent in order to increase the profile's moment of inertia, with the aim of forming an integral part with the container unit, so everything operates as one single structure.

Furthermore, it is worth highlighting that, as previously mentioned, the refrigerated container traditionally forming the semi-trailer is fastened onto the chassis, which is why the use of an elbow plate or tab is considered, which serves as coupling means for said fastening between the unit and the chassis crossbars to which it is screwed, the incorporation of a peg welded to said plate having been envisaged, which makes it possible to free the height of said tab, adapting it to the new bent form of the S in the profile, in order to prevent lateral movements. It is likewise possible to screw the profile directly to the container unit.

Finally, whilst the type of steel used up until now in traditional chassis crossbars is usually S355 carbon steel, the chassis crossbars object of the present invention are preferably made of carbon steel and more preferably still, of the Domex ® 700 and Domex ® 500 varieties. These types of steel have much more elevated mechanical characteristics than the abovementioned steel currently in use, since, amongst other differences, whilst the elastic limit of S355 is 3500 kg/cm², the elastic limit of Domex 500 is 5000 kg/cm² and Domex 700 has an elastic limit of up to 7000 kg/cm². Nevertheless, the above material use preference does not imply that other materials, such as aluminum, steel or composite materials cannot be used, especially those obtained by means of pultrusion.

### Description of the drawings

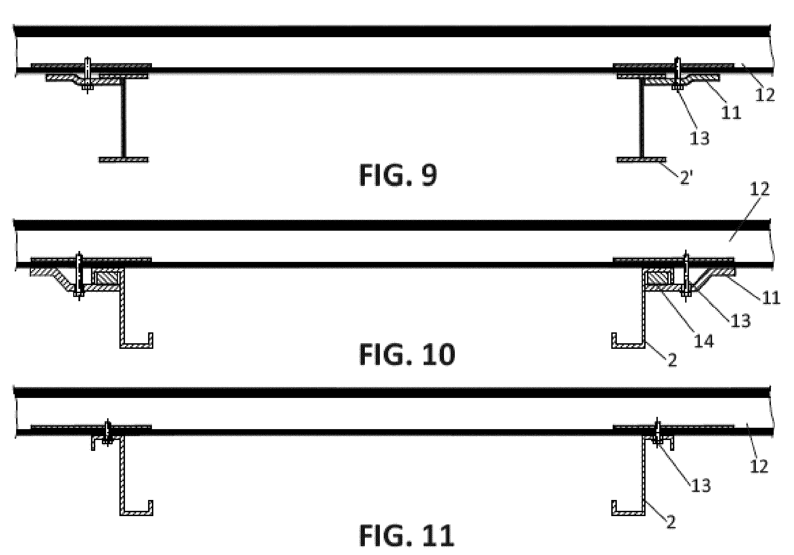

With the aim of complementing the current description and facilitating a greater understanding of the invention characteristics, the present descriptive specification is accompanied by a set of drawings which form an integral part thereof and by way of non-limiting example represent the following:
Figures 1 and 2 are a side elevation and plan views of one possible embodiment of the light-weight chassis for semi-trailers, object of the invention, wherein its general formation can be appreciated.
Figure 3 is a rear elevation view of the chassis, according to the invention, shown in the previous figures and in this case represented on a slightly larger scale in order to facilitate observation of the main components it comprises and, especially, the profile of the crossbars in the same.
Figures 4, 5 and 6 are respective views of the cross-section cuts A-A, B-B, and C-C of the chassis, as shown in figure 2, in appreciation of the continuous S formation of the crossbars in the chassis in all its extension.
Figure 7 is a cross-sectional representation of a traditional crossbar with a double T profile from the state of the art.
Figure 8 is a cross-section view of the crossbar of the chassis in the invention, with an S profile.
Figures number 9 and 10 are both schematic representations of the coupling of the semi-trailer container unit used to fasten said container unit to the chassis by means of an elbow plate, figure 9 showing said coupling to a chassis with traditional double T profiled crossbars and figure 10 showing a chassis according to the invention, with S profiled crossbars, encompassing a steel peg for its adaptation.
Figure 11 represents an alternative way of attaching the container unit to the chassis.

### Preferred embodiment of the invention

In view of the above mentioned figures and in accordance with the reference numbers employed therein, an exemplary embodiment of the invention may be observed, namely a light-weight chassis for semi-trailers.

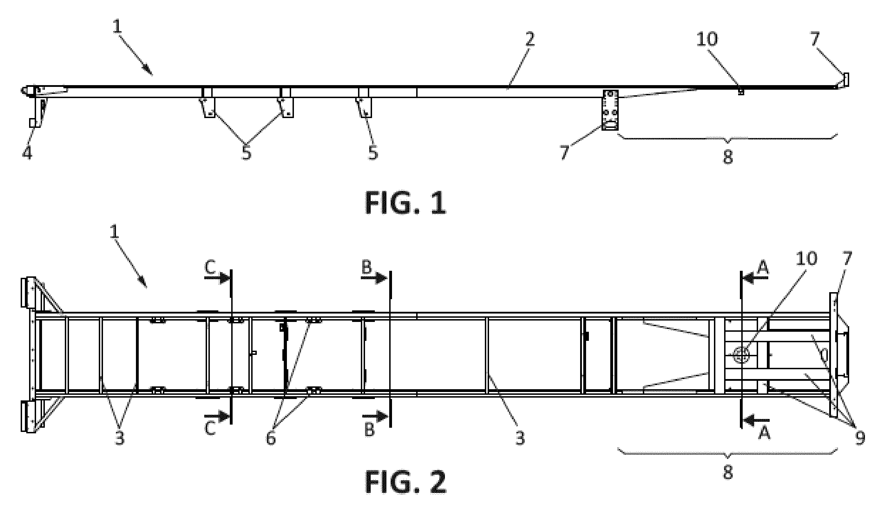

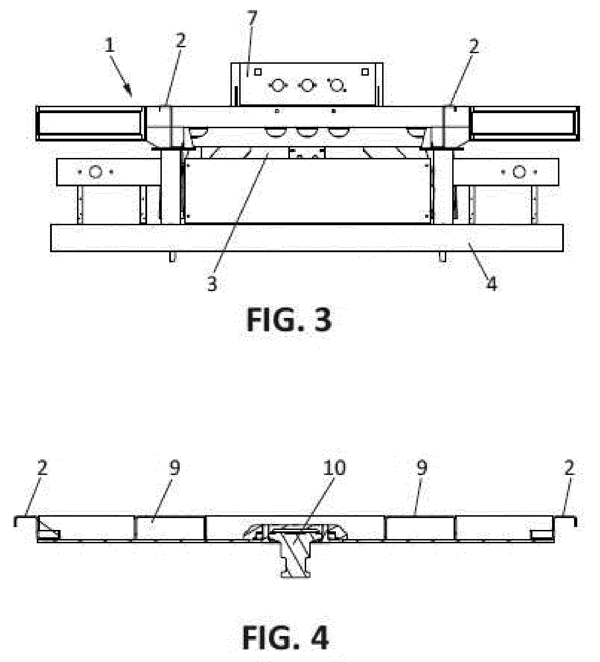

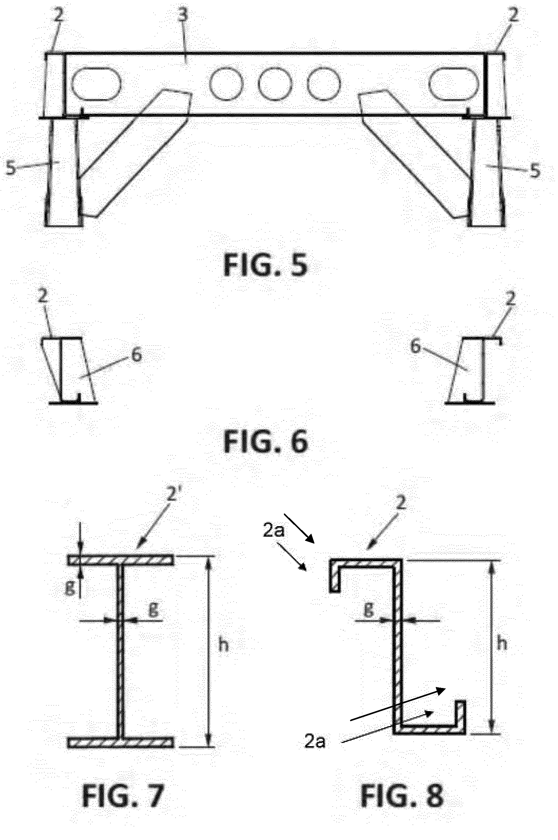

Therefore, as shown in figures 1 to 3, the chassis (1) in question comprises two parallel steel crossbars (2) which span its whole extension and are joined together by means of various crosspieces (3), furthermore comprising, amongst other elements, a rear skirt (4), supports (5) for the axles, reinforcement plates (6) for the suspension diapresses, components (7) perforated with holes to anchor the bodywork and an anterior area (8) with various U profiles (9) between which a King-pin (10) or pivot pin providing a steering joint, is incorporated, which its distinctive feature is that said crossbars (2), rather than having a profile formed in the shape of a double T or I, like those traditional crossbars (2') have, as shown in figure 7 representing the current state of the art, they have an "S" shaped profile, as can be seen in figure 8.

Said S profile of the crossbars (2) remains constant along the whole chassis, even in the anterior area (8) of the King-pin (10), in which, despite being somewhat lower, has the same formation which was furthermore obtained following a bending process, without the need for welding.

It is important to highlight that the continuous S profile of the crossbars (2) is preferably 4 mm deep or thick (g) and has a total height (h) of 200 mm (figure 8) as compared to the deepness or thickness (g) of 5 mm of the core of the traditional crossbars (2') and the 10 mm of its wings and the total height (h) of 220 mm (figure 7).

Likewise, the respective ends (2a) of the "S" profile of the crossbars (2) of the chassis of the invention are elbowed, with the upper portion being bent downwards and the lower portion being bent upwards respectively, which facilitates the increase of the profile's moment of inertia.

Similarly, in order to take advantage from the elbow plates (11) used to attach the container unit (12) of the semi-trailer to the chassis (1) by means of screws (13), the incorporation of a steel peg (14) into said plates (11) is considered, which would be welded to the end of the plates and sized to clear the space determined by the elbowing of the S profile ends (2a) of the crossbars (2), as shown in figure 10. In figure 9, it is possible to observe how said plates (11) are elbowed in order to fit into the crossbars (2') having a traditional double T formation. In figure 11, an alternative method for fastening the container unit (12) to the chassis (2) is shown, entailing joining it directly by means of a screw (13) which crosses the container unit (12) and one of the wings of the chassis (2).

## Claims

1. Profile for crossbar (2) to form the chassis of a semi-trailer, said profile being formed by a central core with a first wing on one end (2a) of said core and extending towards one side in a direction approximately perpendicular to said core and another first wing on the opposite end (2a) of said core and extending towards the opposite side, in a direction also perpendicular to the core, each end (2a) of said first wings having a second wing which extends in a direction approximately perpendicular to said first wings in such a way that, a U profile is formed at each of the ends of the core between the core, the respective first wing and the respective second wing.

2. Light-weight chassis for trailers and semi-trailers, to attach a freight container, comprising two parallel crossbars (2) which span its whole extension and are joint together by means of various crosspieces (3), **characterized in that** the crossbars (2) comprise a profile according to claim 1.

3. Chassis, according to claim 2, **characterized in that** the profile remains constant all along the chassis and is obtained from a bent component.

4. Chassis, according to claim 2, **characterized in that** the profile is 4 mm in thickness (g) and has a total height (h) of 200 mm.

5. Chassis, according to claim 2, **characterized in that** it comprises elbow plates (11) to attach a container unit (12) of a semi-trailer to the chassis (1) wherein a welded steel peg (14) has been incorporated to the end of the elbow plates (11) and sized to clear the space determined by the U-profile at the ends (2a) of the crossbars (2) profile.

6. Chassis, according to claim 2, **characterized in that** the crossbars (2) are made of carbon steel.

## Patentansprüche

1. Profil für Querbalken (2), um das Chassis eines Sattelanhängers zu bilden, wobei das Profil durch einen zentralen Kern mit einem ersten Flügel an einem Ende (2a) des Kerns und sich zu einer Seite hin, in einer Richtung, ungefähr senkrecht zu dem Kern, erstreckend, und einem anderen ersten Flügel am gegenüberliegenden Ende (2a) des Kerns und sich zu der gegenüberliegenden Seite hin, in eine Richtung, ebenfalls senkrecht zum Kern, erstreckend, gebildet wird, wobei jedes Ende (2a) der ersten Flügel einen zweiten Flügel aufweist, der sich in eine Richtung, etwa senkrecht zu den ersten Flügeln, derart erstreckt, dass an jedem Ende des Kerns ein U-Profil zwischen dem Kern, dem jeweiligen ersten Flügel und dem jeweiligen zweiten Flügel gebildet wird.

2. Leichtgewichtiges Chassis für Anhänger und Sattelanhänger, um einen Frachtcontainer zu befestigen, zwei parallele Querbalken (2), die sich über ihre gesamte Ausdehnung erstrecken und zusammen mittels verschiedener Querstücke (3) verbunden sind, umfassend, **dadurch gekennzeichnet, dass** die Querbalken (2) ein Profil nach Anspruch 1 umfassen.

3. Chassis nach Anspruch 2, **dadurch gekennzeichnet, dass** das Profil entlang des ganzen Chassis konstant bleibt und von einem gebogenen Bauteil erhalten wird.

4. Chassis nach Anspruch 2, **dadurch gekennzeichnet, dass** das Profil eine Dicke (g) von 4 mm und eine Gesamthöhe (h) von 200 mm hat.

5. Chassis nach Anspruch 2, **dadurch gekennzeichnet, dass** es Winkelplatten (11) umfasst, um eine Containereinheit (12) eines Sattelanhängers an das Chassis (1) zu befestigen, wobei ein geschweißter Stahlzapfen (14) in das Ende der Winkelplatten (11) eingearbeitet und bemessen wurde, um den Raum, der durch die U-Profile an den Enden (2a) des Profils der Querbalken (2) bestimmt wird, freizugeben.

6. Chassis nach Anspruch 2, **dadurch gekennzeichnet, dass** die Querbalken (2) aus Kohlenstoffstahl hergestellt sind.

## Revendications

1. Profilé pour barre transversale (2) pour former le châssis d'une semi-remorque, ledit profilé étant formé par un noyau central avec une première aile à une extrémité (2a) dudit noyau et s'étendant vers un côté dans une direction approximativement perpendiculaire audit noyau et une autre première aile à l'extrémité opposée (2a) dudit noyau et s'étendant vers le côté opposé, dans une direction également perpendiculaire au noyau, chaque extrémité (2a) desdites premières ailes ayant une deuxième aile qui s'étend dans une direction approximativement perpendiculaire auxdites premières ailes de sorte que, un profil en U est formé à chacune des extrémités du noyau entre le noyau, la première aile respective et la deuxième aile respective.

2. Châssis de poids-léger pour remorques et semi-remorques, pour atteler un conteneur de fret, comprenant deux barres transversales parallèles (2) qui couvrent toute son extension et sont reliées ensemble au moyen de plusieurs pièces transversales (3), **caractérisé en ce que** les barres transversales (2) comprennent un profilé selon la revendication 1.

3. Châssis, selon la revendication 2, **caractérisé en ce que** le profilé reste constant tout au long du châssis et est obtenu à partir d'un composant courbé.

4. Châssis, selon la revendication 2, **caractérisé en ce que** le profilé a 4 mm d'épaisseur (e) et a une hauteur totale (h) de 200 mm.

5. Châssis, selon la revendication 2, **caractérisé en ce qu'**il comprend des plaques coudées (11) pour atteler une unité de conteneur (12) d'une semi-remorque au châssis (1) dans lequel une cheville en acier soudée (14) a été incorporée à l'extrémité des plaques coudées (11) et dimensionnée pour libérer l'espace déterminé par le profil en U aux extrémités (2a) du profilé des barres transversales (2).

6. Châssis, selon la revendication 2, **caractérisé en ce que** les barres transversales (2) sont réalisées en acier au carbone.
